# EUROPÄISCHE PATENTSCHRIFT

(11) **EP 3 386 424 B1**
(45) Veröffentlichungstag und Bekanntmachung des Hinweises auf die Patenterteilung: **02.10.2019**
(21) Anmeldenummer: 16809766.5
(22) Anmeldetag: 08.12.2016
(51) Int. Cl.: A61C 5/64, A61C 5/66

(54) **ZWEI-KOMPONENTEN-MISCHKAPSEL, INSBESONDERE FÜR DENTALE ZWECKE**
TWO-COMPONENT MIXING CAPSULE, IN PARTICULAR FOR DENTAL PURPOSES
CAPSULE DE MELANGE DE DEUX COMPOSANTS, EN PARTICULIER À USAGE DENTAIRE

(30) Priorität: 09.12.2015 DE 102015121453
(43) Veröffentlichungstag der Anmeldung: 17.10.2018
(73) Patentinhaber: Kulzer GmbH, 63450 Hanau (DE)
(72) Erfinder: SUFFEL, Ralf, 63762 Großostheim (DE); UTTERODT, Andreas, 61267 Neu-Anspach (DE); ECK, Michael, 61389 Schmitten (DE); KOCOGLU, Raif, 61279 Grävenwiesbach (DE); BALKENHOL, Markus, 63543 Neuberg (DE)
(74) Vertreter: Bendele, Tanja
(86) Internationale Anmeldenummer: PCT/EP2016/080162
(87) Internationale Veröffentlichungsnummer: WO 2017/097868

(56) Entgegenhaltungen:
- US-A- 4 175 658
- US-A1- 2004 134 222

## Beschreibung

Die Erfindung betrifft eine zwei Komponenten Mischkapsel zur Aufnahme und zum Mischen von zwei vorzugsweise pulverförmigen oder bevorzugt pastösen oder knetbaren, besonders bevorzugt dentalen Zusammensetzungen mit einem Kapselgehäuse, das an seinem vorderen Ende eine Ausbringtülle aufweist, wobei die Mischkapsel einen ersten Mischraum und einen zweiten Mischraum umfasst, wobei die beiden Mischräume zur Lagerung oder für den Transport voneinander getrennt werden können, indem der Mischraum durch ein drehbar gelagertes Griffelement dessen Drehachse (Y) in etwa senkrecht zur Längsachse (Z) der Mischkapsel, vorzugsweise des zweiten Mischraumes, angeordnet ist, in eine erste Stellung gedreht werden kann in der der erste Mischraum vom zweiten Mischraum getrennt ist, vorzugsweise sind die Mittelachsen der Mischräume etwa 90° zueinander angeordnet. Durch Drehen des ersten Mischraumes in eine zweite Stellung in der die Mittelachsen des ersten und zweiten Mischraumes im Wesentlichen koaxial angeordnet sind, bilden die beiden Mischräume einen gemeinsamen Mischraum, wobei durch Aufsetzen eines Auspresskolbens die Zusammensetzung nach dem Mischen ausgefördert werden kann.

Ebenfalls Gegenstand der Erfindung ist ein Verfahren sowie die Verwendung der erfindungsgemässen Mischkapsel zum Mischen und Applizieren von zwei Komponenten Zusammensetzungen, vorzugsweise von dentalen 2K-Zusammensetzungen.

Aus dem Stand der Technik ist eine Vielzahl an Mischkapseln im Dentalbereich bekannt, die zum Lagern und Mischen von zwei Komponentenzusammensetzungen geeignet sind. Kennzeichnend für Mischkapseln im Dentalbereich ist in der Regel ihre geringe Länge von etwa 32 mm, um ein Einsetzen der Mischkapsel in die Haltegabeln von bekannten Mischgeräten zu erlauben. Die Mischkapseln nach dem Stand der Technik weisen in der Regel zwei durch eine Folie mit einer Sollbruchstelle getrennte Kammern auf, die jeweils eine der beiden Bestandteile der zwei Komponentenzusammensetzung umfassen, wobei ein Kolben vor dem Mischen diese Folie durchstößt. Nach dem Mischen kann in die Mischkapsel ein Werkzeug eingesetzt werden, dass einen Austragskolben in der Mischkapsel verschiebt und so die gemischte Zusammensetzung aus der Mischkapsel ausfördern kann.

Nachteilig an den bekannten Mischkapseln ist, dass diese in der Regel dafür ausgelegt sind eine flüssige Monomerkomponente mit einer pulverförmigen Komponente zu vermischen. Aus dem Stand der Technik sind nahezu keine wirtschaftlich herstellbaren oder leicht zu bedienende Mischkapseln bekannt, die in der Lage sind auch zwei pastöse bis knetbare 2K-KomponentenZusammensetzungen mit einander zu mischen. Ferner müssen verschiedene Arretiermechanismen an den Kapseln im Stand der Technik vorgesehen werden, die ein unbeabsichtigtes Durchstossen der Folie verhindern.

Eine Mischkapsel für zwei Komponenten ist aus der Patentschrift US 4,175,658 bekannt.

Aufgabe der Erfindung war es eine Mischkapsel zu entwickeln, die eine Lagerung und ein Mischen von pastösen bis knetbaren und optional mit pulverförmigen oder bevorzugt pastösen bis festen und zugleich thixotropen Mehrkomponentenzusammensetzungen erlaubt, wobei ggf. ebenso pastöse mit pulverförmigen Komponenten gemischt werden können. Ferner bestand die Aufgabe die Mischkapsel so zu dimensionieren, dass diese in gängige Mischapparate, wie sie in Zahnarztpraxen vorhanden sind einsetzbar ist.

Gelöst wurden die Aufgaben mit einer Mischkapsel nach Anspruch 1 sowie einem Verfahren nach Anspruch 13 und der Verwendung nach Anspruch 16.

Gegenstand der Erfindung ist eine Mehr- oder Zwei-Komponenten (2K) Mischkapsel zur Aufnahme, insbesondere Lagerung, und zum Mischen von mindestens zwei, insbesondere pastösen, knetbaren bis festen, vorzugsweise thixotropen und vorzugsweise dentalen Zusammensetzungen mit einem Kapselgehäuse, das an seinem vorderen Ende eine Ausbringöffnung aufweist, wie eine Ausbringöffnung direkt am Gehäuse oder insbesondere an einer integralen oder angesetzten Ausbringtülle, wobei die Mischkapsel ein unteres im Kapselgehäuse drehbar gelagertes Griffelement und ein oberes in dem Kapselgehäuse drehbar gelagertes Griffelement umfasst, wobei vorzugsweise die Drehachse (Y) mindestens eines der Griffelemente in etwa senkrecht zur Längsachse (Z) der Mischkapsel angeordnet ist, und wobei mindestens einem der beiden Griffelemente ein drehbar gelagerter erster Mischraum zugeordnet ist und vorzugsweise im Kapselgehäuse ein zweiter Mischraum angeordnet ist. Bevorzugt ist die jeweilige Drehachse der Griffelemente jeweils unabhängig von einander in etwa senkrecht zur Längsachse der Mischkapsel angeordnet, bevorzugt sind die Drehachsen im Wesentlichen koaxial zueinander angeordnet. Dabei kann mindestens einem der beiden Griffelemente ein drehbar gelagerter erster Mischraum zugeordnet sein, indem der Mischraum, der vorzugsweise als Rohrabschnitt oder einseitig geschlossene Hülse vorliegt, ein integrales Bauteil mit mindestens einem Griffelement bildet oder der separate Mischraum alternativ formschlüssig mit einem oder beiden Griffelementen festgelegt wird. Die jeweiligen Drehachsen der Griffelemente sind, vorzugsweise koaxial zueinander angeordnet, in etwa senkrecht zur Längsachse der Mischkapsel angeordnet, bevorzugt sind beide Griffelemente nur gemeinsam um eine gemeinsame Drehachse, die in etwa senkrecht zur Längsachse der Mischkapsel angeordnet ist, drehbar. Dabei ist es ferner bevorzugt, wenn mindestens einem der Griffelemente ein erster Mischraum zugeordnet ist, der vorzugsweise als Rohrabschnitt oder einseitig geschlossene Hülse vorliegt, und ein integrales Bauteil mit mindestens einem Griffelement bildet. Alternativ kann der erste Mischraum ein separates Bauteil sein, das formschlüssig an einem oder beiden Griffelementen festlegbar ist. So kann der Mischraum bspw. mit mindestens einem Griffelement, insbesondere in einem Clip, verrastet werden.

Die beiden pastösen, knetbaren bis festen, vorzugsweise thixotropen und vorzugsweise dentalen Zusammensetzungen liegen vorzugsweise jeweils getrennt im ersten und zweiten Mischraum als eine einzige pastöse bis knetbare Zusammensetzung vor, insbesondere vorzugsweise als einstückige Zusammensetzung. Alternativ kann die Zusammensetzung in Form mehrerer Komponenten vorliegen, insbesondere weist eine Komponente mindestens 1,5 mm in einer Dimension auf. Die Zusammensetzung liegt vorzugsweise nicht pulverförmig vor.

An den Griffelementen kann eine wandartige Erhöhung oder andersartig geformte Erhöhung als zusätzlicher Griff für ein leichteres Drehen ausgebildet sein. Die erfindungsgemässe Mischkapsel mit Kapselgehäuse und ohne Führungsadapter und ohne Auspresskolben weist vorzugsweise eine Länge von kleiner gleich 10 cm, bevorzugt kleiner gleich 8 cm, besonders bevorzugt eine Länge von kleiner gleich 5 cm oder kleiner gleich 3,5 cm auf. Der gesamte Mischraum der Mischkapsel weist vorzugsweise eine Länge von 2,0 bis 4,0 cm, insbesondere von 2,5 bis 3,0 cm bei einem Durchmesser von 0,5 bis 2,0 cm auf, insbesondere von 0,8 bis 1,2 cm. Das Volumen des gesamten Mischraumes beträgt etwa von 20 bis 200 mm³, insbesondere von 50 mm³ bis 135 mm³. Die erfindungsgemässe Mischkapsel ist derart ausgebildet, dass sie in gängigen PLT Austragsgeräten bzw. PLT Applikatoren eingesetzt werden kann.

Der drehbar gelagerte Mischraum kann innerhalb eines Rohrabschnittes oder in einem einseitig geschlossenen Rohrabschnitt als einseitig geschlossene Hülse angeordnet sein. Vorzugsweise ist der erste Mischraum in einem Rohrabschnitt angeordnet, der integral mit einem drehbar gelagerten Griffelement verbunden ist. Der erste oder der zweite Mischraum sind als Teile des herstellbaren gesamten Mischraumes zu verstehen und können den gesamten Mischraum bilden, in dem vorzugsweise die Mischung erfolgt.

Nach einer bevorzugten Ausführungsform sind die beiden drehbar in dem Kapselgehäuse gelagerten Griffelemente mit einander verbunden, vorzugweise lösbar oder auch dauerhaft verbunden. Sie können mit sich mittels Ultraschall verschweisst, verklebt, und/oder mit dem Kapselgehäuse verrastet oder aneinander gesteckt sein. Alternativ sind ein oder beide Griffelemente mit dem Kapselgehäuse drehbar verbunden. Als ein drehbares Griffelement oder drehbarer Mischraum, Rohrabschnitt oder Hülse wird erfindungsgemäss verstanden, dass die vorgenannten Komponenten um eine Drehachse, die sich in etwa senkrecht zur Längsachse des Kapselgehäuses bzw. senkrecht zur Längsachse des zweiten Mischraumes befindet um mindestens 30° vorzugsweise mindestens um 90° drehbar ist, vorzugsweise sind die Komponenten um 360° drehbar. Wenn die Komponenten um 360° drehbar sind kann es bevorzugt sein auf einem oder beiden Griffelementen Markierungen, die die Stellung der ersten Mischkammer anzeigen anzubringen, insbesondere in Relation zur zweiten Mischkammer. Vorzugsweise weisen die Griffelemente und/oder die Mischkammer Rastnocken auf, damit der Anwender spürt, wenn er die exakte koaxiale Stellung der Mischkammer eingestellt hat.

Ferner ist es bevorzugt, wenn an dem unteren im Kapselgehäuse drehbar gelagerten Griffelement und/oder dem oberen im Kapselgehäuse drehbar gelagerten Griffelement der erste Mischraum angeordnet ist, insbesondere bilden ein drehbargelagertes Griffelement und der erste Mischraum ein einteiliges Bauteil, insbesondere ein integrales Bauteil. Der Mischraum kann vorzugsweise in Form eines Rohrabschnitts oder in einer Alternative als einseitig geschlossener Rohrabschnitt bspw. als einseitig geschlossene zylindrische Hülse vorliegen, wobei diese vorzugweise mit einem Griffelement als ein integrales Bauteil vorliegen. Der Rohrabschnitt kann zylindrisch, kreisförmig, als auch polygonal, wie sechseckig ausgebildet sein.

Nach zwei alternativen bevorzugten Ausführungsformen weist die Mischkapsel einen mit einem der drehbar gelagerten Griffelemente verbundenen Rohrabschnitt auf oder eine einseitig geschlossene zylindrische Hülse auf, die den ersten Mischraum bilden, wobei sich entweder a) im vorderen Bereich im Kapselgehäuse der zweite Mischraum befindet oder b) im hinteren Bereich im Kapselgehäuse der zweite Mischraum befindet. Dabei ist es bevorzugt, wenn der Rohrabschnitt oder die Hülse ein integrales Bauteil mit dem Griffelement bilden. Alternativ kann der als separates Bauteil vorliegende Mischraum formschlüssig mit einem oder beiden Griffelementen festgelegt werden.

Die erfindungsgemässe Mischkapsel kann in verschiedene Stellungen zum Lagern, Mischen oder Applizieren überführt werden. So kann die erfindungsgemässe Mischkapsel mit dem drehbargelagerten Griffelement, insbesondere integral, verbundenen Rohrabschnitt den ersten Mischraum bilden und im vorderen Bereich im Kapselgehäuse ist der zweite Mischraum angeordnet,
wobei sich die Mischkapsel a) in einer ersten Stellung bspw. zur Lagerung oder für den Transport befindet, wenn sich die Längsachse (Z1) des Rohrabschnitts vorzugsweise in etwa 90° verdreht zur Längsachse (Z) des Kapselgehäuses befindet, so dass der erste Mischraum, insbesondere umfassend die Zusammensetzung B, und der zweite Mischraum, insbesondere umfassend die Zusammensetzung A, voneinander getrennt sind, oder wobei sich die Mischkapsel b) in einer zweiten Stellung bspw. "Mischstellung Mischung" befindet, wenn sich die Längsachse (Z1) des Rohrabschnitts vorzugsweise im Wesentlichen koaxial zur Längsachse (Z) des Kapselgehäuses oder des zweiten Mischraumes befindet, so dass der erste Mischraum und der zweite Mischraum einen gemeinsamen Mischraum bilden, insbesondere umfassend die Zusammensetzungen A und B, alternativ befindet sich die Mischkapsel in der zweiten Stellung, wenn der Rohrabschnitt oder die einseitig geschlossene Hülse umfassend den ersten Mischraum so gedreht sind, dass der erste und der zweite Mischraum einen gemeinsamen Mischraum bilden, oder, wobei sich die Mischkapsel in b) der zweiten Stellung ebenfalls in einer Ausbringstellung c) befindet, wenn der Führungsadapter mit beweglichem Auspresskolben am hinteren Ende des Kapselgehäuse angeordnet ist, wobei der bewegliche Auspresskolben den Verschlusskolben durch den ersten Mischraum und den zweiten Mischraum in Richtung auf das vordere Ende des Kapselgehäuses oder in Richtung auf den hinteren Bereich in der Ausbringtülle verschieben kann. Mit dem Auspresskolben kann der Verschlusskolben vorzugsweise im Kapselgehäuse in Richtung auf die Ausbringöffnung geschoben werden, so dass die gemischte Zusammensetzungen C durch den Verschlusskolben in Richtung auf die Ausbringöffnung geschoben wird und aus der Ausbringöffnung herausgedrückt werden kann.
Als getrennt gelten die Mischräume, wenn diese räumlich voneinander getrennt sind und die Zusammensetzungen A und B nicht miteinander wechselwirken können.

Bevorzugt weist mindestens ein Griffelement mindestens ein Arretiermittel, wie eine Rastnocke, auf und optional weist das Kapselgehäuse der Mischkapsel mindestens ein Arretiermittel auf, wie eine Vertiefung, die vorzugsweise als Positiv und Negativ in der zweiten Stellung der Mischkapsel ineinandergreifen, in der aus dem ersten Mischraum und dem zweiten Mischraum ein gemeinsamer Mischraum gebildet wird. Somit wird die Position, in der der erste Mischraum und der zweite Mischraum einen gemeinsamen Mischraum bilden, durch die Arretiermittel fixiert. Die Arretiermittel können beispielsweise mindestens eine Rastnocke und eine entsprechende Vertiefung sein, die ineinandergreifen. Gleichfalls können die mindestens eine Rastnocke an der Mischkapsel oder die mindestens eine Vertiefung an mindestens einem Griffelement ausgebildet sein. Die Arretiermittel, wie Rastnocke(n), und die zum Einrasten der Rastnocken entsprechende Vertiefung(en), vorzugsweise mindestens zwei im etwa 90° Winkel zu einander angeordnete Vertiefungen, erlauben die Einstellung einer Transport- oder Lagerposition des ersten Mischraumes etwa senkrecht zur Längsachse der Mischkapsel, die der ersten Stellung entspricht, und eine Misch- und/oder Austragsposition, in der die Längsachse des ersten Mischraums koaxial zur Längsachse der Mischkapsel arretiert ist, die der zweiten Stellung entspricht.

An die erfindungsgemässe Mischkapsel ist an ihrem hinteren Ende des Gehäuses ein Führungsadapter anbringbar, in dem ein beweglicher Auspresskolben angeordnet ist. Der im Führungsadapter bewegliche, vorzugsweise arretierte Auspresskolben, kann im Führungsadapter bewegt werden, indem eine gewisse Kraft aufgebracht wird, so dass sich die Arretierung löst. Die Arretierung kann aus mindestens einer Erhöhung auf dem äusseren Umfang des Auspresskolbens bestehen, die innen am Führungsadapter anliegt, insbesondere formschlüssig oder kraftschlüssig anliegt.

Der Führungsadapter mit beweglichem Auspresskolben kann vorzugsweise mittels eines Bajonett-Verschlusses, einer Schraub- oder Clipsverbindung oder anderen dem Fachmann bekannten Massnahmen am hinteren Ende des Kapselgehäuses festgelegt werden. Dabei kann es bevorzugt sein, dass vor dem Festlegen des Führungsadapters der Auspresskolben in die Vertiefung des Verschlusskolbens eingesetzt und der Verschlusskolben entlang der ersten Mischkammer in das Kapselgehäuse hineingeschoben werden kann, um anschließend den Führungsadapter an dem hinteren Ende des Kapselgehäuses festzulegen. Erfindungsgemäss wird durch das Aufstecken des Führungsadapters mit Auspresskolben der Verschlusskolben in das Kapselgehäuse in Richtung auf die Ausbringöffnung verschoben. In dieser Position kann die Mischkapsel in übliche Applikatoren für PLT (Compulen) eingesetzt werden. Durch das Verschieben des Verschlusskolbens beim Aufstecken des Führungsadapters konnte der Hub in der Mischkapsel unter Beachtung des maximalen Hubs von üblichen Applikatoren vergrössert werden.

Ebenfalls Gegenstand der Erfindung ist eine Mischkapsel mit Kapselgehäuse, wobei in dem Kapselgehäuse an dessen hinteren Ende ein Verschlusskolben angeordnet ist, der insbesondere die Mischkapsel an ihrem hinteren Ende verschliesst, vorzugsweise luftdicht und/oder feuchtigskeitsdicht verschliesst. Dabei ist es bevorzugt, dass der Verschlusskolben entlang der Längsachse (Z) der Mischkapsel durch den ersten Mischraum oder den hohlen Rohrabschnitt und einen zweiten Mischraum hindurchführbar ist, vorzugsweise durch den gemeinsamen Mischraum, wenn der erste Mischraum oder der Rohrabschnitt im Wesentlichen koaxial zur Längsachse (Z) der Mischkapsel ausgerichteten sind, wobei vorzugsweise der erste und der zweite Mischraum einen gemeinsamen Mischraum bilden. Der Verschlusskolben ist vorzugsweise innen im hinteren Ende des Gehäuses angeordnet. Der Verschlusskolben ist vorzugsweise entlang der Längsachse der Mischkapsel verschiebbar angeordnet und verschliesst die Mischkapsel an ihrem hinteren Ende, vorzugsweise luftdicht und/oder feuchtigskeitsdicht.

Der zweite Mischraum wird vorzugsweise durch einen Bereich im vorderen mittleren Bereich des Kapselgehäuses gebildet. Alternativ kann der zweite Mischraum auch im hinteren Bereich des Kapselgehäuses angeordnet sein. Der erste Mischraum befindet sich im drehbar gelagerten Rohrabschnitt oder in der drehbar gelagerten einseitig geschlossenen Hülse mit einem Boden, wobei der Boden der einseitig geschlossenen Hülse mittels des Verschlusskolbens von der Hülse lösbar ist, um den Verschlusskolben durch die Hülse hindurchschieben zu können. Sofern sich der erste Mischraum in einem drehbar gelagerten Rohrabschnitt befindet, insbesondere einem hohlen Rohrabschnitt, kann der Verschlusskolben in der zweiten Stellung durch den Rohrabschnitt und optional den zweiten Mischraum geschoben werden, wenn die Achse des ersten Mischraumes, insbesondere des hohlen Rohrabschnitts, koaxial zur Längsachse der Mischkapsel ausgerichtet ist.

Gleichfalls Gegenstand der Erfindung ist eine Mischkapsel in der der bewegliche Verschlusskolben in einer Alternative in seinem Durchmesser reduzierbar ist, insbesondere ist der Durchmesser (D1) des Verschlusskolbens im Wesentlichen auf den Durchmesser (D2) reduzierbar. Dazu trägt der Verschlusskolben vorzugsweise an seinem äusseren Umfang Lamellen. In einer weiteren Alternative kann der Verschlusskolben einen festen Durchmesser aufweisen. Der erfindungsgemässe Verschlusskolben weist vorzugsweise an seiner dem Mischraum abgewandten Seite eine Vertiefung auf, in die der vordere Bereich des Auspresskolbens einsteckbar ist. Ferner weist der Verschlusskolben an seinem äußeren Umfang mindestens eine, vorzugsweise radial abstehende Lamelle auf. Nach bevorzugten Alternativen weist der Verschlusskolben zwei bis eine Vielzahl an Lamellen am äusseren Umfang auf. Die Lamellen können vorzugsweise aus einem elastischen Material, bspw. TPE (Thermoplastischem Elastomer) oder aufgrund ihrer Geometrie elastisch ausgebildet sein. Die Lamellen bilden vorzugsweise ein integrales Bauteil mit dem Verschlusskolben. Ferner können die Lamellen an einer Seite am äusseren Umfang oder an beiden Seiten mit einer Phase ausgebildet sein. Die Lamellen können aus dem gleichen Material wie der Verschlusskolben oder auch aus einem Silicon oder einen anderen geeigneten Material hergestellt sein.

An der dem Mischraum zugewandten Seite weist der Verschlusskolben vorzugsweise zumindest teilweise eine definierte Oberflächenrauheit auf. Bevorzugt weist die dem Mischraum zugewandte Seite eine Fläche einer definierten Grösse, vorzugsweise eine kreisförmige Fläche mit Oberflächenrauheit, auf. Die Oberflächenrauheit kann mittels Erodieren, abtragenden Verfahren, wie Sandstrahlen, ätzen oder auch aufbauenden Verfahren etc. hergestellt werden. Die Oberflächenrauheit liegt vorzugsweise bei einer Rauheit (mitten Rauheit) Ra von 3,5 µm (Mikrometer) bis 30 µm, vorzugsweise von 6 µm bis 24 µm, bevorzugt von 8 bis µm bis 20 µm, besonders bevorzugt von 10 bis 20 µm, alternativ um 10 µm mit +/- 2,5 µm. Alternativ kann die Rauheit der Erodierstruktur nach VDI 12 3400 die Kennung 30, 33, 36, 39 oder 42 aufweisen. Gleichfalls kann das Kapselgehäuse oder der Rohrabschnitt soweit erforderlich zumindest teilweise bis vollständig mit einer definierten Oberflächenrauheit versehen sein.

Ferner weist die Mischkapsel an ihrem Gehäuse a) die Ausbringöffnung auf. Die Ausbringöffnung ist vorzugsweise in einer Ausbringtülle als integraler Bestandteil des Kapselgehäuses ausgebildet. Alternativ kann eine Ausbringöffnung b) in einer an das Kapselgehäuse festlegbaren Ausbringtülle angeordnet sein. Die Ausbringtülle ist vorzugsweise in sich gebogen und weist eine Form wie bekannte Mischkapseln bzw. Carpulen auf, so weist sie bspw. eine Form auf, die ein Austragen des Dentalmaterials in eine Zahnkavität erlaubt.

Nach einer weiteren Alternative ist es bevorzugt, wenn in der Ausbringtülle innen im vorderen oder hinteren Bereich vor dem Auslass mindestens ein Widerstandmittel angeformt ist, vorzugsweise ist das Widerstandsmittel so ausgebildet, dass es eine Veränderung der Viskosität der auszutragenden Zusammensetzung und/oder ein zusätzliches Vermischen der auszutragenden Zusammensetzung bewirken kann. In bevorzugten Ausführungsformen ist das Widerstandsmittel eine nicht über den gesamten Durchmesser reichende Wand oder mindestens eine Nase.

Das Material aus dem die Einzelteile der Mischkapsel, wie das Kapselgehäuse, die Ausbringtülle, die Griffelemente, der Rohrabschnitt, die Hülse, der Verschlusskolben, der Führungsadapter, der Auspresskolben und/oder das Widerstandsmittel bestehen umfasst vorzugsweise einen tribologisch modifizierten Kunststoff, wie PBT-POM; Polybutylenterephthalat (PBT), Polyoxymethylen (POM), PC (Polycarbonat), sowie Kunststoffe umfassend organische und/oder anorganische Füllstoffe, wie bspw. die folgenden Additive, wie Silikonöl, Grafit (GR), Fluorkohlenstoff (TF), Kohlenstofffasern (CF), MoS2 (MO), Polyolefinwaxen oder andere Festschmierstoffe. Ebenfalls geeignete Materialien zur Herstellung der vorgenannten Kapselbestandteile können ausgewählt sein aus einem polymeren Material, gefülltem polymeren Material, einem Faserverstärktem Polymer, Hybridmaterial, wobei das polymere Material ausgewählt sein kann aus Polycarbonat, Polyamid, Fluorpolymeren, Polysulfid enthaltenden Polymeren, Polysulfon enthaltenden Polymeren, Polyaryletherketonen, Polyimiden, PAEK (Polyaryletherketonen), PEEK (Polyetheretherketonen), PEK (Polyether-ketonen); PEKK (Poly(etherketonketonen)), PEEEK (Poly(etheretheretherketonen)), PEEKK (Poly(etheretherketonketonen)), PEKEKK (Poly(etherketonetherketonketonen); PES (Polyarylsulfonen), PPSU (Polyarylsulfonen), PSU (Polysulfonen), PPS (Polyphenylensulfiden), PFA (Perfluoralkoxy-Polymeren), PFE (Poly(fluorenylenethynylen)polymeren); PVDF (Polyvinylidenfluoriden), PCTFE (Polytetrafluoroethylen), PAI (Polyamideimiden); PI (Polyimiden), PEI (Polyetherimiden), PBI (Polybenz-imidazolen). Der Auspresskolben ist vorzugsweise aus Polycarbonat gefertigt. Der Verschlusskolben kann vorzugsweise aus einem TPE (Thermoplastischen Elastomer) mit einer Härte von 60 - 100 Shore A, vorzugsweise 70 -90 Shore A gefertigt sein. Ein bevorzugtes TPE kann umfassen TPE-S, wie SEBS; Styrol-Ethenbuten-Styrol-Blockcopolymer.

Nach einer weiteren Ausführungsform ist Gegenstand der Erfindung ein Verfahren zum Mischen von mindestens zwei Zusammensetzungen A und B zu einer Zusammensetzung C in der erfindungsgemässen Mischkapsel, insbesondere von pastösen, knetbaren bis festen, vorzugsweise thixotropen Zusammensetzungen, besonders bevorzugt von dentalen Zusammensetzungen, umfassend die Schritte
(i) Überführen der Mischkapsel aus einer a) ersten Stellung in eine b) zweite Stellung indem durch Drehen des Griffelementes um seine Drehachse (Y) mit dem Rohrabschnitt in dem sich der erste Mischraum und die Zusammensetzung B befindet, der Rohrabschnitt, insbesondere aus einer nicht koaxialen Stellung seiner Längsachse zur Längsachse der Kapsel, vorzugsweise einer etwa senkrecht zur Längsachse angeordneten Stellung, in Richtung auf die Längsachse (Z) des Kapselgehäuses, insbesondere im Wesentlichen koaxial zur Längsachse (Z) des Kapselgehäuses gedreht wird, so dass der erste Mischraum umfassend die Zusammensetzung B und der zweite Mischraum im Kapselgehäuse umfassend die Zusammensetzung A einen gemeinsamen Mischraum bilden,
(ii) Mischen der Zusammensetzungen A und B miteinander, wobei sich insbesondere die Mischkapsel in der zweiten Stellung b) befindet, und
(iii) Erhalten der Zusammensetzung C.

Das (iv) Ausbringen der Zusammensetzung C aus der Mischkapsel erfolgt vorzugsweise mit den Schritten (iv.1) Festlegen des Führungsadapters mit beweglichem Auspresskolben am hinteren Ende des Kapselgehäuses, und optional (iv.2) Einschieben des Auspresskolbens zusammen mit dem Verschlusskolben in das Kapselgehäuse der Mischkapsel vorzugsweise bis der Verschlusskolben gegen die vordere innere Wand des Kapselgehäuses gedrückt wird, so dass der Verschlusskolben vom Auspresskolben durch den gemeinsamen Mischraum geschoben wird.

In dem erfindungsgemässen Verfahren befindet sich vorzugsweise die Mischkapsel a) in einer ersten Stellung, wenn sich die Längsachse (Z1) des Rohrabschnitts vorzugsweise in etwa mindestens 30° vorzugsweise um etwa 90° verdreht zur Längsachse (Z) des Kapselgehäuses befindet, so dass der erste Mischraum, insbesondere umfassend die Zusammensetzung B, und der zweite Mischraum, insbesondere umfassend die Zusammensetzung A, voneinander getrennt sind, oder wobei sich die Mischkapsel
b) in einer zweiten Stellung, bspw. einer Mischstellung befindet, wenn sich die Längsachse des Rohrabschnitts vorzugsweise im Wesentlichen koaxial zur Längsachse des Kapselgehäuses befindet, so dass der erste Mischraum und der zweite Mischraum einen gemeinsamen Mischraum bilden, insbesondere umfassend die Zusammensetzungen A und B, oder,
wobei sich die Mischkapsel in Stellung b) auch in einer Ausbringstellung c) befindet, wenn der Führungsadapter mit beweglichem Auspresskolben am hinteren Ende des Kapselgehäuses angeordnet ist, wobei der bewegliche Auspresskolben den Verschlusskolben durch den gemeinsamen Mischraum in Richtung auf den Auslass oder die Ausbringöffnung verschieben kann oder der Verschlusskolben gegen die vordere innere Wand des Kapselgehäuses verschoben werden kann. Dabei wird durch den Verschlusskolben vorzugsweise die Zusammensetzung C in Richtung auf die Ausbringöffnung geschoben und kann durch die Ausbringöffnung appliziert werden.

Beim Mischen wird die Mischkapsel zumindest entlang eines Teils der Längsachse der Mischkapsel bzw. des Kapselgehäuses oszillierend bewegt. Bevorzugt wird die Mischkapsel mit einem Teil ihrer Längsachse entlang einer Kreisbahn mit einem Radius oszillierend bewegt.

Zum Mischen der Zusammensetzungen A und B ist der Führungsadapter mit beweglichem Auspresskolben vorzugsweise noch nicht am hinteren Ende des Kapselgehäuses festgelegt.

In einer Alternative ist der Rohrabschnitt als eine einseitig geschlossene Hülse mit Boden ausgebildet in dem sich der erste Mischraum und die Zusammensetzung B befindet, wobei der Boden der Hülse nach dem Mischen vom Verschlusskolben in die Hülse verschoben werden kann, insbesondere kann der Boden bis in das vordere Ende des Kapselgehäuses geschoben werden. Der Boden der Hülse kann folienartig ausgebildet sein und kann Sollbruchstellen aufweisen. Nach einer bevorzugten Ausführungsform wird der erste Mischraum von einem beidseitig offenen Rohrabschnitt gebildet.

Gleichfalls Gegenstand der Erfindung ist die Verwendung einer Mischkapsel in der eine erste Mischkammer durch Drehen um ihre Drehachse (Y), wobei die Drehachse (Y) in etwa senkrecht zur Längsmittelachse (Z) des Kapselgehäuses der Mischkapsel angeordnet ist, in eine erste Stellung zur Lagerung von vorzugsweise mindestens zwei Zusammensetzungen und in eine zweite Stellung zum Mischen der Zusammensetzungen und Applizieren der gemischten Zusammensetzung drehbar ist, wobei in der zweiten Stellung die erste Mischkammer mit einer zweiten Mischkammer, die im vorderen oder hinteren Bereich des Kapselgehäuses angeordnet sein kann, eine gemeinsame Mischkammer bilden. Dabei wird die erste Mischkammer vorzugsweise durch Drehen ihrer Längsachse (Z1) um ihre Drehachse (Y) geschwenkt.

Ferner ist Gegenstand der Erfindung die Verwendung der Mischkapsel zum Lagern, Mischen und Applizieren (Ausbringen) von pastösen bis knetbaren oder festen dentalen zwei Komponenten Zusammensetzungen. Die mischbaren Zusammensetzungen sind vorzugsweise thixotrope dentale Zusammensetzungen.

Die in den nachfolgenden Figuren dargestellten Ausführungsformen stellen beispielhafte erfindungsgemässe Gegenstände dar, ohne die Erfindung auf diese Gegenstände zu beschränken.

Die Figuren stellen dar:
**Figur 1****:** Erfindungsgemäße Mischkapsel **1** (leer) mit Führungsadapter **7** in Schnittdarstellung und nach vorne geschobenen Verschlusskolben **6.**
**Figur 2a** und **2b****:** Wie Figur 1, wobei Figur 2a eine Schnittdarstellung und Fig. 2b eine Draufsicht ist.
**Figuren 3a**, **3a*******, **3b** und **3b*****:** Mischkapsel **1** in Schnittdarstellung in erster Stellung (Lagerposition) mit Zusammensetzungen **A** und **B** - mit Führungsadapter **7** und Auspresskolben **8**, der nicht festgelegt ist.
**Figuren 4a****,** **4b** und **4c****:** Schnittdarstellung der Mischkapsel **1** in zweiter Stellung mit koaxialer Ausrichtung des ersten und zweiten Mischraumes **5a** und **5b.**
**Figuren 5a**, **5b** und **5c****:** Mischkapsel **1** mit gemischter Zusammensetzung **C** bereit zur Applikation mit aufgesetztem Führungsadapter **7** und Auspresskolben **8.**
**Figuren 5d** und **5e****:** Mischkapsel in Stellung in der die Applikation der Zusammensetzung **C** bereits erfolgt ist mit ganz nach vorne geschobenem Verschlusskolben und Auspresskolben.
**Figuren 6a, 6b, 6c****:** Griffelemente mit Rohrabschnitt
**Figuren 7a**, **7b, 7c** und **7d****:** Verschlusskolben **6**
**Figuren 8a, 8b****:** Auspresskolben **8**
**Figur 9****:** Führungsadapter **7** mit Auspresskolben und Bajonett-Verschluss
**Figuren 10a** und **10b****:** Ausbringtülle innen mit Widerstandsmitteln **9.**

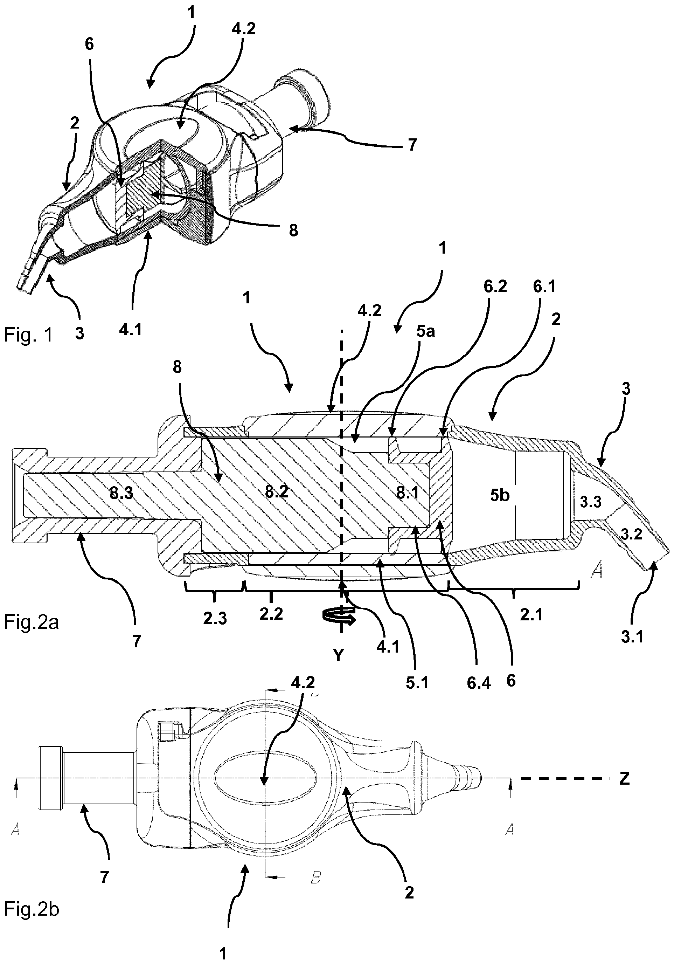

Figur 1 zeigt eine erfindungsgemäße leere Mischkapsel **1** mit Führungsadapter **7** und Auspresskolben **8** in Schnittdarstellung mit nach vorne geschobenem Verschlusskolben **6.** Die Mischkapsel **1** umfasst ein Kapselgehäuse **2** mit einer Ausbringtülle **3.** Ferner sind die drehbar gelagerten Griffelemente **4.1** und **4.2** dargestellt. Figuren 2a und 2b stellen eine Mischkapsel nach Figur 1 im Querschnitt und in der Draufsicht dar. In Figur 2a ist der erste Mischraum **5a** mit dem zweiten Mischraum **5b** in der Mischkapsel **1** koaxial angeordnet, so dass der Verschlusskolben **6** durch den Auspresskolben **8**, der beweglich im Führungsadapter **7** gelagert ist, durch den ersten Mischraum **5a** bis an den zweiten Mischraum **5b** eingeschoben dargestellt ist. In dieser Position bilden der erste und der zweite Mischraum den gemeinsamen Mischraum. In der Ausbringtülle **3** sind der hintere **3.3** und der mittlere **3.2** Bereich im Inneren der Ausbringtülle sowie die Ausbringöffnung **3.1** dargestellt. Die Griffelemente **4.1** und **4.2** können um die Drehachse **Y** gedreht werden, wobei gleichzeitig der Rohrabschnitt **5.1** umfassend den ersten Mischraum **5a** mitgedreht wird. Vorzugsweise weist mindestens ein Griffelement auf der äußeren Oberfläche Rippen auf, besonders bevorzugt weisen beide Griffelemente auf der äußeren Oberfläche Erhöhungen und/oder Vertiefungen, wie Rippen, auf, die dem Anwender ein Schwenken der Griffelemente um die Mittelachse erleichtern. Die Längsachse **Z** der Mischkapsel ist in Figur 2b angedeutet. In dem Verschlusskolben **6** ist der vordere Bereich **8.1** des Auspresskolbens in die Vertiefung **6.4** eingesteckt. Der mittlere Bereich **8.2** des Auspresskolbens **8** dient der Führung des Kolbens im der Mischkammer. Der hintere Bereich **8.3** kann mit einem externen Werkzeug weiter in Richtung der Mischkammern geschoben werden. Die Lamellen **6.1** und **6.2** des Verschlusskolbens **6** liegen innen an der Mischkammer an.

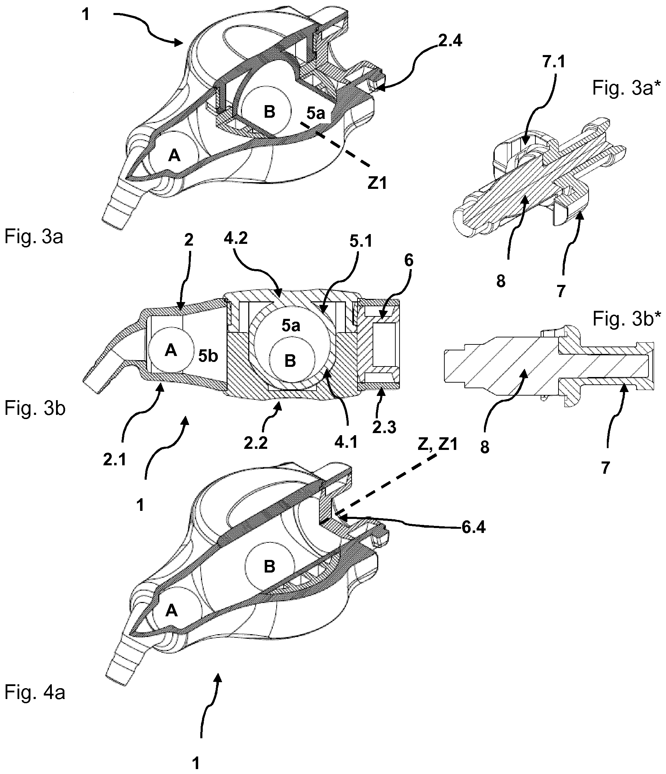

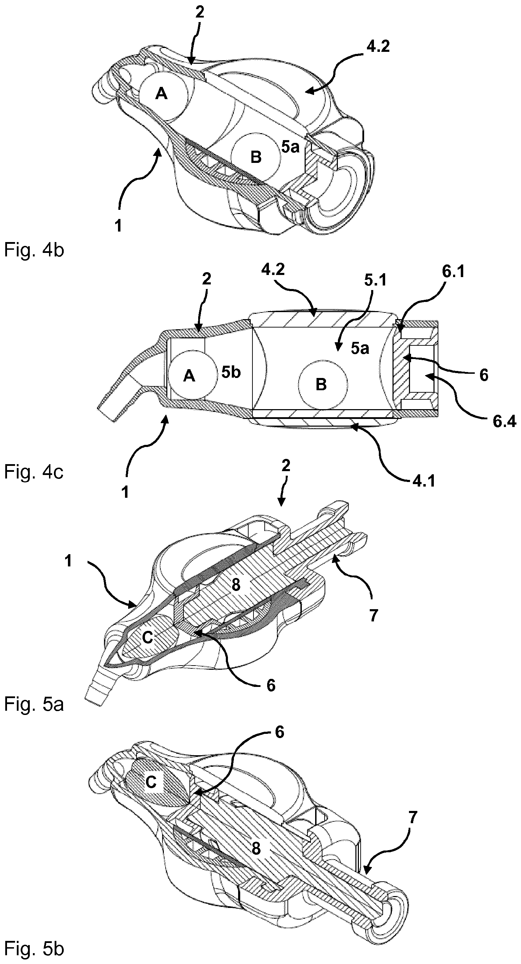

Figuren 3a, 3a* und 3b, 3b* zeigen eine Mischkapsel **1** in Schnittdarstellung in der erster Stellung (Verkaufs-/Lagerposition) enthaltend die Zusammensetzung **B** im ersten Mischraum **5a** und die Zusammensetzung **A** im zweiten Mischraum **5b.** Die Längsachse **Z1** des ersten Mischraumes bzw. Rohrabschnittes ist etwa senkrecht zur Längsachse **Z** der Kapsel bzw. des Kapselgehäuses dargestellt. An der Kapsel ist eine Verschlussmittel **2.4** im hinteren Bereich angeformt, wie bspw. ein Bajonett-Verschluss **2.4.** Ferner zeigen die Figuren 3a und 3b den Führungsadapter **7** mit eingestecktem Auspresskolben **8.** Der Auspresskolben ist mit im oberen Bereich des Auspresskolbens am äusseren Umfang umlaufenden Arretiermitteln **8.4**, wie Erhöhungen oder Rastnocken bzw. Nasen **8.4**, mit dem Adapter verrastet. Figur 3b zeigt einen Rohrabschnitt **5.1** mit erstem Mischraum **5a**, dessen Längsachse **Z1** um 90° zur Längsachse **Z** der Kapsel verdreht ist. Im zweiten Mischraum **5b** ist die Zusammensetzung **A** dargestellt. In den Figuren 4a, 4b und 4c ist die zweite Stellung der Mischkapsel **1** dargestellt, in der der erste Mischraum **5a** und der zweite Mischraum **5b** koaxial zueinander angeordnet sind. In der zweiten Stellung können die Zusammensetzungen **A** und **B** miteinander in dem gebildeten gesamten Mischraum **5a** und **5b** gemischt werden. In dieser Ausführungsform bilden der Rohrabschnitt **5a** mit dem Griffelement **4.2** ein integrales Bauteil. Die Griffelemente **4.1** und **4.2** sind drehbar mit dem Kapselgehäuse **2** und/oder mit sich selbst verrastet. Vorzugsweise sind die Griffelemente **4.1** und **4.2** mit sich selbst verrastet und nur gemeinsam drehbar im Kapselgehäuse **2** gelagert. In Figur 4c ist die vordere umlaufende Lamelle **6.1** des Verschlusskolbens **6** dargestellt.

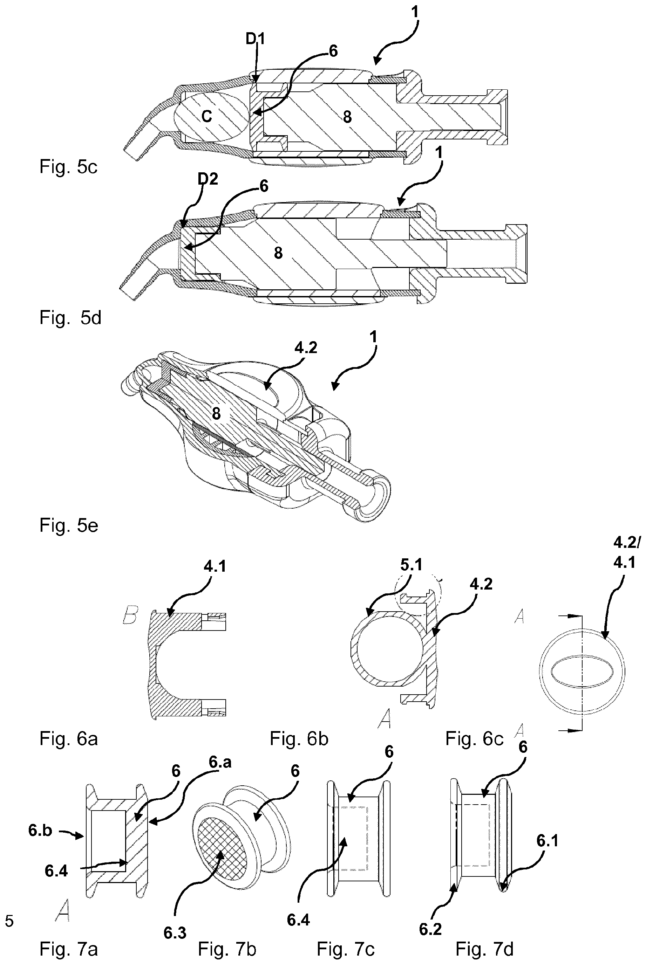

In den Figuren 5a, 5b, 5c, 5d und 5e ist die Mischkapsel **1** mit gemischter Zusammensetzung **C** in einer Schnittdarstellung dargestellt. Der Auspresskolben **8** ist in der Vertiefung **6.4** des Verschlusskolbens **6** eingesteckt und durch die ersten Mischraum **5a** bis an den zweiten Mischraum **5b** geschoben. Die Zusammensetzung **C** kann nun durch weiteres Vortreiben des Auspresskolbens **8** sowie des Verschlusskolbens **6** aus der Mischkapsel **1** appliziert werden. Der Verschlusskolben liegt in dieser Position noch mit einem Durchmesser **D1** mit abstehenden Lamellen vor, wie in Figur 5c dargestellt. Bei weiterem Vorschieben des Verschlusskolbens legen sich die Lamellen aussen an den Verschlusskolben **6** an und der Durchmesser des Verschlusskolbens vermindert sich auf den Durchmesser **D2**, wie in Figur 5d und 5e dargestellt.

Die Figuren 6a, 6b, 6c stellen die Griffelemente **4.1** und **4.2** dar. Das Griffelement **4.2** umfasst den Rohrabschnitt **5.1**, der den ersten Mischraum **5a** bildet. Vorzugsweise weist das Griffelement auf der äußeren Oberfläche Rippen auf. Die Rippen erleichtern dem Anwender das Drehen der Griffelemente **4.1** und **4.2.** Vorzugsweise zeigen die Rippen die Stellung des ersten Mischraumes an. Wenn die Rippen koaxial zur Längsachse des Kapselgehäuses ausgerichtet sind, ist auch der erste Mischraum **5a** koaxial zur Längsachse des Kapselgehäuses ausgerichtet. Es wird die zweite Stellung, d.h. Misch- und/oder Austragsposition angezeigt. Sind die Rippen senkrecht zur Längsmittelachse des Kapselgehäuses ausgerichtet wird die erste Stellung, d.h. Transport- und/oder Lagerposition, angezeigt.

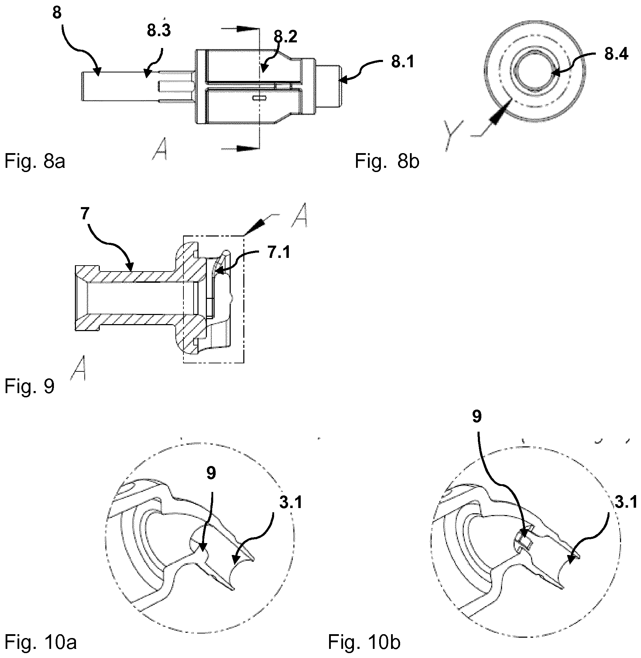

In den Figuren 7a, 7b, 7c und 7d ist der Verschlusskolben **6** dargestellt, wobei Figuren 7a und 7c die Vertiefung **6.4** auf dem Mischraum abgewandten Seite **6b** zeigt. Figur 7b zeigt die Oberflächenrauheit **6.3** des Verschlusskolbens auf der dem ersten Mischraum **5a** zugewandten Seite **6a.** In Figur 7d sind die ein- oder zwei phasigen Lamellen **6.1** und **6.2** dargestellt. In den Figuren 8a, 8b und 9 sind der Auspresskolben **8**, der vorzugsweise aus PC (Polycarbonat) gefertigt sein kann, mit seinem vorderen **8.1**, mittleren **8.2** und hinteren Bereich **8.3** dargestellt, wobei in Figur 8b die Noppen die innen am Führungsadapter **7** anliegen in der Draufsicht dargestellt. Figur 9 zeigt ein Mittel **7.1** zum Festlegen des Führungsadapters, wie einen Bajonett-Verschluss **7.1**, am Gehäuse der Mischkapsel **2.** In den Figuren 10a und 10b sind die Widerstandsmittel **9**, die als eine teilweise Wand oder nach innen hervorstehende und in Richtung auf den Mischraum gerichtete Nase(n) ausgebildet sein können.

### Bezugszeichen:

- **1**: Mischkapsel
- **2**: Kapselgehäuse; **2.1** vorderes Ende; **2.2** mittlerer Bereich, **2.3** hinteres Ende des Kapselgehäuses **2, 2.4** Verschlussmittel, wie Bajonett-Verschluss
- **3**: Ausbringtülle, **3.1** Ausbringöffnung; **3.2, 3.3** innen im Auslass; **3.2** vorderer Bereich, **3.3** hinterer Bereich in innerer Ausbringtülle **3**
- **4.1, 4.2**: unteres drehbar gelagerte Griffelement **4.1** und oberes drehbar in dem Gehäuse gelagertes Griffelement **4.2**
- **5a**: drehbar gelagerter erster Mischraum; **5b** zweiter Mischraum; **5a+5b** gesamter Mischraum; **5.1** Rohrabschnitt, insbesondere zylindrisches Hülse oder einseitig geschlossene zylindrische Hülse **5.1**
- **6**: Verschlusskolben, **6a** dem Mischraum **5a** zugewandten Seite **6a**, dem Mischraum abgewandten Seite **6b**, **6b** dem Mischraum abgewandten Seite
- **6.1**: Lamelle an der dem Mischraum zugewandten Seite **6a**, **6.2** Lamelle an der dem Mischraum **5** abgewandten Seite **6b**,
- **6.3**: Oberflächenrauheit **6.3** Verschlusskolben
- **6.4**: Vertiefung auf der dem Mischraum abgewandten Seite **6b**
- **7**: Führungsadapter, **7.1** Mittel zum Festlegen, wie Bajonett-Verschluss
- **8**: Auspresskolben, **8.1** vorderen Bereiches **8.1** des Auspresskolbens **8**, **8.2** mittlerer Bereich, **8.3** hinterer Bereich des Auspresskolbens **8**, **8.4** Arretiermittel, wie Erhöhung
- **9**: Widerstandsmittel, teilweise Wand oder Nase(n) bzw. Zapfen
- **D1**, **D2**: Durchmesser **D1** des Verschlusskolbens im Wesentlichen ist reduzierbar auf den Durchmesser **D2**
- **Y**: Drehachse der Griffelemente (**4.1**, **4.2**) und/oder der Mischkammer **5a**
- **Z**: Längsachse der Kapsel, **Z1** Längsachse Rohrabschnitt
- **A**: pastöse bzw. knetbare dentalen Zusammensetzungen (Komponente **A**)
- **B**: pastöse bzw. knetbare dentalen Zusammensetzungen (Komponente **B**)
- **C**: gemischte pastöse bzw. knetbare dentalen Zusammensetzungen (Mischung der Komponenten **A** und **B**)

## Patentansprüche

1. Zwei-Komponenten-Mischkapsel (1) zur Aufnahme und zum Mischen von zwei Zusammensetzungen mit einem Kapselgehäuse (2), das an seinem vorderen Ende (2.1) eine Ausbringöffnung (3.1) aufweist, wobei die Mischkapsel (1) umfasst ein unteres im Kapselgehäuse drehbar gelagertes Griffelement (4.1) und ein oberes in dem Kapselgehäuse drehbar gelagertes Griffelement (4.2), wobei die Drehachse (Y) der Griffelemente (4.1, 4.2) in etwa senkrecht zur Längsachse (Z) der Mischkapsel (1) angeordnet ist, und wobei mindestens einem der beiden Griffelemente ein drehbar gelagerter erster Mischraum (5a) zugeordnet ist und im Kapselgehäuse (2) ein zweiter Mischraum (5b) angeordnet ist, **dadurch gekennzeichnet, dass** am hinteren Ende im Kapselgehäuse ein Verschlusskolben angeordnet ist, wobei der Verschlusskolben (6) entlang der Längsachse (Z) der Mischkapsel durch den ersten Mischraum (5a) und den zweiten Mischraum (5b) hindurchführbar ist, wenn der erste Mischraum (5a) koaxial zur Längsachse (Z) der Mischkapsel (1) ausgerichtet ist.

2. Mischkapsel nach Anspruch 1, **dadurch gekennzeichnet, dass**
die jeweilige Drehachse (Y) der Griffelemente (4.1, 4.2) jeweils unabhängig von einander in etwa senkrecht zur Längsachse (Z) der Mischkapsel (1) angeordnet ist.

3. Mischkapsel nach Anspruch 1 oder 2, **dadurch gekennzeichnet,**
**dass** die beiden drehbar gelagerten Griffelemente (4.1, 4.2) miteinander verbunden sind, oder mindestens eines der Griffelemente mit dem Kapselgehäuse drehbar verbunden ist.

4. Mischkapsel nach einem der Ansprüche 1 bis 3, **dadurch gekennzeichnet,**
**dass** an dem unteren im Kapselgehäuse (2) drehbar gelagerten Griffelement (4.1) und/oder dem oberen im Gehäuse (2) drehbar gelagerten Griffelement (4.2) der erste Mischraum (5a) angeordnet ist, insbesondere bilden ein drehbar gelagertes Griffelement und der erste Mischraum (5a), der vorzugsweise in Form eines Rohrabschnitts (5.1) oder einer einseitig geschlossenen zylindrischen Hülse (5.1) vorliegt, ein einteiliges Bauteil, insbesondere ein integrales Bauteil.

5. Mischkapsel nach Anspruch 4, **dadurch gekennzeichnet, dass** der mit einem drehbar gelagerten Griffelement (4.1, 4.2) verbundene Rohrabschnitt (5.1) oder die einseitig geschlossene zylindrische Hülse (5.1) den ersten Mischraum (5a) bildet und sich a) im vorderen Bereich (2.1) im Kapselgehäuse (2) der zweite Mischraum (5b) befindet oder b) im hinteren Bereich (2.3) im Kapselgehäuse (2) der zweite Mischraum (5b) befindet.

6. Mischkapsel nach Anspruch 4, **dadurch gekennzeichnet, dass** der mit einem drehbar gelagerten Griffelement (4.1, 4.2) verbundene Rohrabschnitt (5.1) den ersten Mischraum (5a) bildet und sich im vorderen Bereich (2.1) im Kapselgehäuse (2) der zweite Mischraum (5b) befindet,
wobei in sich die Mischkapsel a) in einer ersten Stellung (Lagerung) befindet, wenn sich die Längsachse (Z1) des Rohrabschnitts (5.1) vorzugsweise in etwa 90° verdreht zur Längsachse (Z) des Kapselgehäuses (2) befindet, so dass der erste Mischraum (5a), insbesondere umfassend die Zusammensetzung B, und der zweite Mischraum (5b), insbesondere umfassend die Zusammensetzung A, voneinander getrennt sind, oder wobei sich die Mischkapsel
b) in einer zweiten Stellung befindet, wenn sich die Längsachse (Z1) des Rohrabschnitts (5.1) vorzugsweise im Wesentlichen koaxial zur Längsachse (Z) des Kapselgehäuses (2) befindet, so dass der erste Mischraum (5a) und der zweite Mischraum (5b) einen gemeinsamen Mischraum (5a+5b) bilden, insbesondere umfassend die Zusammensetzungen A und B, oder,
wobei sich die Mischkapsel in Stellung b) in einer Ausbringstellung c) befindet, wenn ein Führungsadapter (7) mit beweglichem Auspresskolben (8) am hinteren Ende (2.3) des Kapselgehäuses (2) angeordnet ist, wobei der bewegliche Auspresskolben (8) und der Verschlusskolben (6) durch den gemeinsamen Mischraum (5a+5b) in Richtung auf das vordere Ende (2.1) des Kapselgehäuses oder in Richtung auf den hinteren Bereich (3.3) in der Ausbringtülle (3) verschiebbar sind.

7. Mischkapsel nach Anspruch 4, **dadurch gekennzeichnet, dass** im Kapselgehäuse (2) am hinteren Ende (2.3) ein Verschlusskolben (6) angeordnet ist, wobei der Verschlusskolben (6) entlang der Längsachse (Z) der Mischkapsel durch den hohlen Rohrabschnitt (5.1) und einen zweiten Mischraum (5b) hindurchführbar ist, wenn der Rohrabschnitt (5.1) koaxial zur Längsachse (Z) der Mischkapsel (1) ausgerichtet sind.

8. Mischkapsel nach einem der Ansprüche 1 bis 7, **dadurch gekennzeichnet, dass** der bewegliche Verschlusskolben (6) in seinem Durchmesser reduzierbar ist.

9. Mischkapsel nach einem der Ansprüche 1 bis 8, **dadurch gekennzeichnet, dass** an das hintere Ende (2.3) des Gehäuses (2) der Mischkapsel (1) ein Führungsadapter (7), in dem ein beweglicher Auspresskolben (8) angeordnet ist, anbringbar ist.

10. Mischkapsel nach einem der Ansprüche 1 bis 9, **dadurch gekennzeichnet, dass** der Verschlusskolben (6) a) auf der einem Mischraum (5a, 5b, 5a+5b) zugewandten Seite (6a) zumindest teilweise eine definierte Oberflächenrauheit (6.3) aufweist und/oder b) auf der einem Mischraum (5a, 5b, 5a+5b) abgewandten Seite (6b) eine Vertiefung (6.4) zur Aufnahme des vorderen Bereiches (8.1) des Auspresskolbens (8) aufweist.

11. Mischkapsel nach einem der Ansprüche 1 bis 10, **dadurch gekennzeichnet, dass**
a) die Ausbringöffnung (3.1) an einer Ausbringtülle (3) angeordnet ist, und die Ausbringtülle integraler Bestandteil des Kapselgehäuses (2) ist oder
b) die Ausbringöffnung (3.1) eine Ausbringtülle (3) ist und an dem Kapselgehäuse (2) festlegbar ist.

12. Mischkapsel nach Anspruch 11, **dadurch gekennzeichnet, dass**
in der Ausbringtülle (3) innen im vorderen oder hinteren Bereich (3.2, 3.3) vor dem Auslass (3.1) mindestens ein Widerstandsmittel (9) angeformt ist.

13. Verfahren zum Mischen von mindestens zwei Zusammensetzungen A und B zu einer Zusammensetzung C in einer Mischkapsel nach einem der Ansprüche 1 bis 12, umfassend die Schritte
(i) Überführen der Mischkapsel aus einer a) ersten Stellung in eine b) zweite Stellung indem durch Drehen mindestens eines Griffelementes (4.1, 4.2) um seine Drehachse (Y) mit dem Rohrabschnitt (5.1),in dem sich der Mischraum (5a) und die Zusammensetzung B befindet, der Rohrabschnitt (5.1) in Richtung auf die Längsachse (Z) des Kapselgehäuses (2) gedreht wird, so dass der erste Mischraum (5a) umfassend die Zusammensetzung B und der zweite Mischraum (5b) im Kapselgehäuse (2) umfassend die Zusammensetzung A einen gemeinsamen Mischraum (5a+5b) bilden,
(ii) Mischen der Zusammensetzungen A und B miteinander, indem die Mischkapsel (1) bewegt wird, und
(iii) Erhalten der Zusammensetzung C.

14. Verfahren nach Anspruch 13, **dadurch gekennzeichnet, dass** das (iv) Ausbringen der Zusammensetzung C aus der Mischkapsel erfolgt, mit den Schritten
(iv.1) Festlegen des Führungsadapters (7) mit beweglichem Auspresskolben (8) am hinteren Ende (2.3) des Kapselgehäuses (2),
(iv.2) Einschieben des Auspresskolbens (8) zusammen mit dem Verschlusskolben (6) in das Kapselgehäuse (2) der Mischkapsel (1), so dass der Verschlusskolben (6) vom Auspresskolben (8) durch den gemeinsamen Mischraum (5a+5b) geschoben wird.

15. Verfahren nach Anspruch 13 oder 14, **dadurch gekennzeichnet, dass**
sich die Mischkapsel a) in einer ersten Stellung befindet, wenn sich die Längsachse (Z1) des Rohrabschnitts (5.1) vorzugsweise in etwa 90° verdreht zur Längsachse (Z) des Kapselgehäuses (2) befindet, so dass der erste Mischraum (5a), insbesondere umfassend die Zusammensetzung (B), und der zweite Mischraum (5b), insbesondere umfassend die Zusammensetzung (A), voneinander getrennt sind, oder wobei sich die Mischkapsel
b) in einer zweiten Stellung befindet, wenn sich die Längsachse (Z1) des Rohrabschnitts (5.1) vorzugsweise koaxial zur Längsachse des Kapselgehäuses (2) befindet, so dass der erste Mischraum (5a) und der zweite Mischraum (5b) einen gemeinsamen Mischraum (5a+5b) bilden, insbesondere umfassend die Zusammensetzungen (A und B), oder,
wobei sich die Mischkapsel in Stellung b) auch in einer Ausbringstellung c) befindet, wenn der Führungsadapter (7) mit beweglichem Auspresskolben (8) am hinteren Ende (2.3) des Kapselgehäuses (2) angeordnet ist, wobei der bewegliche Auspresskolben (8) und der Verschlusskolben (6) durch den gemeinsamen Mischraum (5a+5b) in Richtung auf die Ausbringöffnung (3.1) verschiebbar sind.

16. Verwendung einer Mischkapsel nach einem der Ansprüche 1 bis 12, wobei der erste Mischraum (5a) durch Drehen um seine Drehachse (Y), wobei die Drehachse (Y) in etwa senkrecht zur Längsmittelachse (Z) des Kapselgehäuses (2) der Mischkapsel (1) angeordnet ist, in eine erste Stellung zur Lagerung und in eine zweite Stellung zum Mischen und Applizieren drehbar ist, wobei in der zweiten Stellung der erste Mischraum (5a) mit dem zweiten Mischraum (5b) einen gemeinsamen Mischraum (5a + 5b) bildet.

17. Verwendung einer Mischkapsel nach einem der Ansprüche 1 bis 12, zum Lagern, Mischen und Applizieren von pastösen bis knetbaren dentalen Zwei-Komponenten-Zusammensetzungen.

## Claims

1. Two-component mixing capsule (1) for intake and for mixing two compositions with a capsule housing (2) having a discharge opening (3.1) at its front end (2.1),
the mixing capsule (1) comprising a lower handhold element (4.1) rotatably mounted in the capsule housing and an upper handhold element (4.2) rotatably mounted in the capsule housing, the rotational axis (Y) of the handhold elements (4.1, 4.2) being approximately perpendicularly arranged to the longitudinal axis (Z) of the mixing capsule (1), and a rotatably mounted first mixing chamber (5a) being assigned to at least one of the two handhold elements, and a second mixing chamber (5b) being arranged in the capsule housing (2), **characterised in that**
a sealing piston is arranged at the back end (2.3) in the capsule housing (2), the sealing piston (6) being passable through the first mixing chamber (5a) and the second mixing chamber (5b) along the longitudinal axis (Z) of the mixing capsule when the first mixing chamber (5a) is coaxially oriented to the longitudinal axis (Z) of the mixing capsule (1).

2. Mixing capsule according to claim 1, **characterised in that**
the respective rotational axis (Y) of the handhold elements (4.1, 4.2), each independently from each other, is approximately perpendicularly arranged to the longitudinal axis (Z) of the mixing capsule (1).

3. Mixing capsule according to claim 1 or 2, **characterised in**
**that** the two rotatably mounted handhold elements (4.1, 4.2) are interconnected, or at least one of the handhold elements is rotatably connected to the capsule housing.

4. Mixing capsule according to any one of the claims 1 to 3, **characterised in**
**that** the first mixing chamber (5a) is arranged at the lower handhold element (4.1.) rotatably mounted in the capsule housing (2) and/or at the upper handhold element (4.2) rotatably mounted in the housing (2), in particular one rotatably mounted handhold element and the first mixing chamber (5a), preferably being in the form of a pipe section (5.1) or of a cylindrical one-side closed sleeve (5.1), form a one-piece component, in particular an integral component.

5. Mixing capsule according to claim 4, **characterised in**
**that** the pipe section (5.1) connected to one rotatably mounted handhold element (4.1, 4.2) or the cylindrical one side-closed sleeve (5.1) forms the first mixing chamber (5a), and a) the second mixing chamber (5b) is located in the front region (2.1) in the capsule housing (2) or b) the second mixing chamber (5b) is located in the back region (2.3) in the capsule housing (2).

6. Mixing capsule according to claim 4, **characterised in**
**that** the pipe section (5.1) connected to the rotatably mounted handhold element (4.1, 4.2) forms the first mixing chamber (5a) and the second mixing chamber (5b) is located in the front region (2.1) in the capsule housing (2),
the mixing capsule a) being in a first position (storage) when the longitudinal axis (Z1) of the pipe section (5.1) is preferably twisted by approximately 90° to the longitudinal axis (Z) of the capsule housing (2) so that the first mixing chamber (5a), in particular comprising composition B, and the second mixing chamber (5b), in particular comprising composition A, are separated from each other, or
the mixing capsule
b) being in a second position when the longitudinal axis (Z1) of the pipe section (5.1) is preferably substantially coaxial to the longitudinal axis (Z) of the capsule housing (2) so that the first mixing chamber (5a) and the second mixing chamber (5b) form a common mixing chamber (5a+5b), in particular comprising compositions A and B, or
the mixing capsule in position b) being in a discharge position c) when a guiding adapter (7) with movable squeezing piston (8) is arranged at the back end (2.3) of the capsule housing (2), the movable squeezing piston (8) and the sealing piston (6) being slidable through the common mixing chamber (5a+5b) in the direction toward the front end (2.1) of the capsule housing or in the direction toward the back region (3.3) in the discharge spout (3).

7. Mixing capsule according to claim 4, **characterised in that**
a sealing piston (6) is arranged at the back end (2.3) in the capsule housing (2), the sealing piston (6) being passable through the hollow pipe section (5.1) and a second mixing chamber (5b) along the longitudinal axis (Z) of the mixing capsule when the pipe section (5.1) is coaxially oriented to the longitudinal axis (Z) of the mixing capsule (1).

8. Mixing capsule according to any one of the claims 1 to 7, **characterised in that** the movable sealing piston (6) is reducible in its diameter.

9. Mixing capsule according to any one of the claims 1 to 8, **characterised in that** a guiding adapter (7), in which a movable squeezing piston (8) is arranged, is attachable to the back end (2.3) of the housing (2) of the mixing capsule (1).

10. Mixing capsule according to any one of the claims 1 to 9, **characterised in that** the sealing piston (6) a) has at least in part a defined surface roughness (6.3) on the side (6a) facing a mixing chamber (5a, 5b, 5a+5b) and/or b) has a recess (6.4) for receiving the front region (8.1) of the squeezing piston (8) on the side (6b) averting a mixing chamber (5a, 5b, 5a+5b).

11. Mixing capsule according to any one of the claims 1 to 10, **characterised in that**
a) the discharge opening (3.1) is arranged at a discharge spout (3), and the discharge spout is an integral part of the capsule housing (2), or
b) the discharge opening (3.1) is a discharge spout (3) and is fixable at the capsule housing (2).

12. Mixing capsule according to claim 11, **characterised in that**
at least one resistance means (9) is integrally formed inside the discharge spout (3) in the front or back region (3.2, 3.3) in front of the discharge opening (3.1).

13. Method for mixing at least two compositions A and B into a composition C in a mixing capsule according to any one of the claims 1 to 12, comprising the steps of
(i) transferring the mixing capsule from a a) first position into a b) second position by the pipe section (5.1) being rotated in the direction toward the longitudinal axis (Z) of the capsule housing (2), by rotating at least one handhold element (4.1, 4.2) with the pipe section (5.1) in which the mixing chamber (5a) and composition B is located about its rotational axis (Y), so that the first mixing chamber (5a) comprising composition B and the second mixing chamber (5b) in the capsule housing (2) comprising composition A form a common mixing chamber (5a+5b),
(ii) mixing compositions A and B with each other, by the mixing capsule (1) being moved, and
(iii) obtaining composition C.

14. Method according to claim 13, **characterised in that**
(iv) discharging of composition C from the mixing capsule is made, with the steps of
(iv.1) fixing the guiding adapter (7) with movable squeezing piston (8) at the back end (2.3) of the capsule housing (2),
(iv.2) pushing the squeezing piston (8) into the capsule housing (2) of the mixing capsule (1) along with the sealing piston (6) so that the sealing piston (6) is pushed through the common mixing chamber (5a+5b) by the squeezing piston (8).

15. Method according to claim 13 or 14, **characterised in that**
the mixing capsule a) is in a first position when the longitudinal axis (Z1) of the pipe section (5.1) is preferably twisted by approximately 90° to the longitudinal axis (Z) of the capsule housing (2) so that the first mixing chamber (5a), in particular comprising composition B, and the second mixing chamber (5b), in particular comprising composition A, are separated from each other, or the mixing capsule
b) being in a second position when the longitudinal axis (Z1) of the pipe section (5.1) is preferably coaxial to the longitudinal axis (Z) of the capsule housing (2) so that the first mixing chamber (5a) and the second mixing chamber (5b) form a common mixing chamber (5a+5b), in particular comprising compositions (A and B), or
the mixing chamber in position b) being also in a discharge position c) when the guiding adapter (7) with movable squeezing piston (8) is arranged at the back end (2.3) of the capsule housing (2), the movable squeezing piston (8) and the sealing piston (6) being slideable through the common mixing chamber (5a+5b) in the direction toward the discharge opening (3.1).

16. Use of a mixing capsule according to any one of the claims 1 to 12, wherein the first mixing chamber (5a) is rotatable in a first position for storing and in a second position for mixing and applying, by rotating about its rotational axis (Y), the rotational axis (Y) is approximately perpendicularly arranged to the longitudinal central axis (Z) of the capsule housing (2) of the mixing capsule (1), the first mixing chamber (5a) and the second mixing chamber (5b) forming a common mixing chamber (5a+5b) in the second position.

17. Use of a mixing capsule according to any one of the claims 1 to 12 for storing, mixing and applying of pasty to kneadable dental two-component compositions.

## Revendications

1. Capsule de mélange à deux composants (1) pour l'apport et pour mélanger deux compositions avec un boîtier de capsule (2) ayant une ouverture de décharge (3) à sa extrémité antérieure (2.1),
la capsule de mélange (1) comprenant un élément de poignée inférieur (4.1) monté à rotation dans le boîtier de capsule et un élément de poignée supérieur (4.2) monté à rotation dans le boîtier de capsule, l'axe de rotation (Y) des éléments de poignée (4.1, 4.2) étant approximativement perpendiculairement disposé à l'axe longitudinal (Z) de la capsule de mélange (1), et une première chambre de mélange monté à rotation (5a) est assignée à au moins un des deux éléments de poignée, et une deuxième chambre de mélange (5b) est disposée dans le boîtier de capsule (2), **caractérisé en ce qu'**
un piston d'étanchéité est disposé à l'extrémité arrière (2.3) dans le boîtier de capsule (2), le piston d'étanchéité étant passable par la première chambre de mélange (a) et la deuxième chambre de mélange (5b) le long de l'axe longitudinal (Z) de la capsule de mélange lorsque la première chambre de mélange (5a) est coaxialement orientée à l'axe longitudinal (Z) de la capsule de mélange (1).

2. Capsule de mélange selon la revendication 1, **caractérisée en ce que**
l'axe de rotation respectif (Y) des éléments de poignée (4.1, 4.2), chacun indépendamment l'un de l'autre, est disposé approximativement perpendiculairement à l'axe longitudinal (Z) de la capsule de mélange (1).

3. Capsule de mélange selon la revendication 1 ou 2, **caractérisée en ce que**
les deux éléments de poignée montés à rotation (4.1, 4.2) sont interconnectés, ou au moins un des éléments de poignée est rotativement connecté au boîtier de capsule.

4. Capsule de mélange selon l'une des revendications 1 à 3, **caractérisée en ce**
**que** la première chambre de mélange (5a) est disposée à l'élément de poignée inférieur (4.1) monté à rotation dans le boîtier de capsule (2) et/ou à l'élément de poignée supérieur (4.2) montée à rotation dans le boîtier (2), en particulière un élément de poignée monté à rotation et la première chambre de mélange (5a), de préférence étant sous forme d'une section de tuyau (5.1) ou d'une douille cylindrique fermée d'un côté (5.1), forment un composant monobloc, en particulière un composant intégral.

5. Capsule de mélange selon la revendication 4, **caractérisée en ce**
**que** la section de tuyau (5.1) connectée à un élément de poignée monté à rotation (4.1, 4.2) ou la douille cylindrique fermée d'un côté (5.1) forme la première chambre de mélange (5a), et a) la deuxième chambre de mélange (5b) est située dans la partie antérieure (2.1) dans le boîtier de capsule (2) ou b) la deuxième chambre de mélange (5b) est située dans la partie arrière (2.3) dans le boîtier de capsule (2).

6. Capsule de mélange selon la revendication 4, **caractérisée en ce**
**que** la section de tuyau (5.1) connectée à un élément de poignée monté à rotation (4.1, 4.2) forme la première chambre de mélange (5a), et la deuxième chambre de mélange (5b) est située dans la partie antérieure (2.1) dans le boîtier de capsule (2),
la capsule de mélange a) étant dans une première position (le stockage) lorsque l'axe longitudinal (Z1) de la section de tuyau (5.1) est, de préférence, tordue par approximativement 90° à l'axe longitudinal (Z) du boîtier de mélange (2) de sorte que la première chambre de mélange (5a), en particulière comprenant la composition B, et la deuxième chambre de mélange (5b), en particulière comprenant la composition A, sont séparées l'une des l'autres, ou
la capsule de mélange
b) étant dans une deuxième position lorsque l'axe longitudinal (Z1) de la section de tuyau (5.1) est, de préférence, substantiellement coaxial à l'axe longitudinal (Z) du boîtier de capsule (2) de sorte que la première chambre de mélange (5a) et la deuxième chambre de mélange (5b) forment une chambre de mélange commune (5a+5b), en particulière comprenant les compositions A et B, ou
la chambre de mélange dans la position b) étant dans une position de décharge c) lorsqu'un adapteur de guidage (7) avec un piston de pressage mobile (8) est disposé à l'extrémité arrière (2.3) du boîtier de capsule (2), le piston de pressage mobile (8) et le piston d'étanchéité (6) étant coulissables par la chambre de mélange commune (5a+5b) en direction vers l'extrémité antérieure (2.1) du boîtier de capsule ou en direction vers l'extrémité arrière (3.3) dans l'embout de décharge (3).

7. Capsule de mélange selon la revendication 4, **caractérisée en ce que**
un piston d'étanchéité (6) est disposé à l'extrémité arrière (2.3) dans le boîtier de capsule (2), le piston d'étanchéité étant passable par la section de tuyau creuse (5.1) et une deuxième chambre de mélange (5b) le long de l'axe longitudinal (Z) de la capsule de mélange lorsque la section de tuyau (5.1) est coaxialement orientée à l'axe longitudinal (Z) de la capsule de mélange (1).

8. Capsule de mélange selon l'une des revendications 1 à 7, **caractérisée en ce que** le piston d'étanchéité mobile (6) est réductible dans son diamètre.

9. Capsule de mélange selon l'une des revendications 1 à 8, **caractérisée en ce qu'**un adapteur de guidage (7), dans lequel un piston de pressage mobile (8) est disposé, est attachable à l'extrémité arrière (2.3) du boîtier (2) de la capsule de mélange (1).

10. Capsule de mélange selon l'une des revendications 1 à 9, **caractérisée en ce que** le piston d'étanchéité (6) a) a au moins en partie une rugosité de surface définie (6.3) sur le côté (6a) faisant face à une chambre de mélange (5a, 5b, 5a+5b) et/ou b) a au moins une encoche (6.4) pour accueillir la partie antérieure (8.1) du piston de pressage (8) sur le côté (6b) non faisant face à une chambre de mélange (5a, 5b, 5a+5b).

11. Capsule de mélange selon l'une des revendications 1 à 10, **caractérisée en ce que**
a) l'ouverture de décharge (3.1) est disposée à un embout de décharge (3), et l'embout de décharge est un une partie intégrale du boîtier de capsule (2) ou
b) l'ouverture de décharge (3.1) est un embout de décharge (3) et est fixable au boîtier de capsule (2).

12. Capsule de mélange selon la revendication 11, **caractérisée en ce qu'**
au moins un moyen de résistance (9) est préformé à l'intérieur de l'embout de décharge (3) dans la partie antérieure ou arrière (3.2, 3.3) avant l'ouverture de décharge (3.1).

13. Procédé pour mélanger au moins deux compositions A et B en une composition C dans un capsule de mélange selon l'une des revendications 1 à 12, comprenant les étapes de
(i) transférer la capsule de mélange d'une a) première position en une b) deuxième position par la section de tuyau (5.1) étant tournée en direction vers l'axe longitudinale (Z) du boîtier de capsule (2), par tourner au moins un élément de poignée (4.1, 4.2) avec la section de tuyau (5.1) dans laquelle la chambre de mélange (5a) et la composition B est située autour de son axe de rotation (Y), de sorte que la première chambre de mélange (5a) comprenant la composition B et la deuxième chambre de mélange (5b) dans le boîtier de capsule (2) comprenant la composition A forment une chambre de mélange commune (5a+5b),
(ii) mélange les compositions A et B l'une avec l'autre, par la capsule de mélange (1) étant mouvoir, et
(iii) obtenir la composition C.

14. Procédé selon la revendication 13, **caractérisé en ce que**
(iv) la décharger de la composition C de la capsule de mélange est faite, avec les étapes de
(iv.1) fixer l'adapteur de guidage (7) avec le piston de pressage mobile (8) à l'extrémité arrière (2.3) du boîtier de capsule (2),
(iv.2) pousser le piston de pressage (8) dans le boîtier de capsule (2) de la capsule de mélange (1) avec le piston d'étanchéité (6) de sorte que le piston d'étanchéité (5) est poussé par la chambre de mélange commune (5a+5b) par le piston de pressage (8).

15. Procédé selon la revendication 12 ou 14, **caractérisé en ce que**
la capsule de mélange a) est dans une première position (le stockage) lorsque l'axe longitudinal (Z1) de la section de tuyau (5.1) est, de préférence, tordue par approximativement 90° à l'axe longitudinal (Z) du boîtier de mélange (2) de sorte que la première chambre de mélange (5a), en particulière comprenant la composition B, et la deuxième chambre de mélange (5b), en particulière comprenant la composition A, sont séparées l'une des l'autres, ou la capsule de mélange
b) étant dans une deuxième position lorsque l'axe longitudinal (Z1) de la section de tuyau (5.1) est, de préférence, coaxial à l'axe longitudinal (Z) du boîtier de capsule (2) de sorte que la première chambre de mélange (5a) et la deuxième chambre de mélange (5b) forment une chambre de mélange commune (5a+5b), en particulière comprenant les compositions A et B, ou
la chambre de mélange dans la position b) étant aussi dans une position de décharge c) lorsqu'un adapteur de guidage (7) avec un piston de pressage mobile (8) est disposé à l'extrémité arrière (2.3) du boîtier de capsule (2), le piston de pressage mobile (8) et le piston d'étanchéité (6) étant coulissables par la chambre de mélange commune (5a+5b) en direction vers l'embout de décharge (3).

16. Utilisation d'une capsule de mélange selon l'une des revendications 1 à 12, selon laquelle la première chambre de mélange est tournable dans une première position pour le stockage et dans une deuxième position pour mélanger et appliquer, par tournant autour de son axe de rotation (Y), l'axe de rotation (Y) est approximativement perpendiculairement disposé à l'axe longitudinal central (Z) du boîtier de capsule (2) de la capsule de mélanger (1), la première chambre de mélange (5a) avec la deuxième chambre de mélange (5b) formant une chambre de mélange commune (5a+5b) dans la deuxième position.

17. Utilisation d'une capsule de mélange selon l'une des revendications 1 à 12 pour le stockage, le mélange et l'application des compositions à deux composants de pâteuses à pétrissables.
